# EUROPÄISCHE PATENTSCHRIFT

(11) **EP 0 534 933 B1**
(45) Veröffentlichungstag und Bekanntmachung des Hinweises auf die Patenterteilung: **19.01.1994**
(21) Anmeldenummer: 88903799.0
(22) Anmeldetag: 16.04.1988
(51) Int. Cl.: B60G 21/04

(54) **KOPPELSTANGE ZUR GELENKIGEN BEFESTIGUNG EINES U-FORM-STABILISATORARMS**
COUPLING ROD FOR ARTICULATED FASTENING OF A U-SHAPED STABILIZING BAR
TIGE DE COUPLAGE POUR LA FIXATION ARTICULEE D'UN BRAS D'UNE BARRE STABILISATRICE EN U

(43) Veröffentlichungstag der Anmeldung: 07.04.1993
(73) Patentinhaber: Volkswagen Aktiengesellschaft, 38436 Wolfsburg (DE)
(72) Erfinder: ENGEL, Michael, D-3170 Gifhorn/Winkel (DE)
(86) Internationale Anmeldenummer: EP8800326
(87) Internationale Veröffentlichungsnummer: WO8909705

(56) Entgegenhaltungen:
- DE-U- 6 801 096
- FR-A- 2 353 409
- US-A- 2 155 867
- US-A- 2 394 276
- US-A- 2 792 215

## Beschreibung

Die Erfindung bezieht sich auf eine Koppelstange zur gelenkigen Befestigung eines U-Form-Stabilisatorarms der im Oberbegriff des Patentanspruchs 1 genannten Art.

U-Form-Stabilisatoren werden im allgemeinen mit ihrem etwa quer zur Fahrzeuglängsrichtung ausgerichteten Rücken über gummielastische Lager am Fahrzeugaufbau angelenkt, während ihre etwa in Fahrzeuglängsrichtung weisenden Arme gelenkig mit den Radführungslenkern oder auch mit den Radträgern selbst in Verbindung stehen. Grundsätzlich sind aber auch Anordnungen bekannt, insbesondere in Verbindung mit Starrachsen, bei denen die Stabilisatorarme am Fahrzeugaufbau angelenkt sind, während der Rücken des U-Form-Stabilisators mit den Radführungslenkern bzw. der Achse in Verbindung steht.

Im allgemeinen erfolgt dabei die gelenkige Anlenkung der Stabilisatorarme unter Zwischenschaltung von Koppelstangen, durch welche die sich beim Ein- und Ausfedern aufgrund der unterschiedlichen Kinematik ergebenden unterschiedlichen Wege der Radführungslenker einerseits und der Stabilisatorarme andererseits ausgeglichen werden.

Diese Wegunterschiede sind bei einer Querlenkerachse oder bei einer Federbein/Querlenkerachse, wie sie bei modernen frontgetriebenen Fahrzeugen üblich ist, besonders groß; hier werden nämlich die Stabilisatorarme um eine quer zur Fahrzeuglängsachse verlaufende Drehachse geschwenkt, während die Querlenker und damit auch deren Koppelstangen-Angriffspunkte um eine etwa in Fahrzeuglängsrichtung verlaufende Schwenkachse verschwenkt werden.

Um die auftretenden Wegunterschiede ausgleichen zu können, erfolgt die Anlenkung der Koppelstange daher üblicherweise (z. B. US-PS 2 027 577, DE-GM 68 01 096) sowohl am Stabilisatorarm als auch am Radführungslenker bzw. am Fahrzeugaufbau mit Hilfe gummielastischer Elemente.

Es ist aber auch üblich (z. B. US-PS 2 792 215), die etwa in Fahrzeuglängsrichtung weisenden Stabilisatorarme eines U-Form-Stabilisators nicht über Koppelstangen gelenkig, sondern - unter Einbettung in vergleichsweise großvolumigen vorgespannten Gummiblöcken - unmittelbar und vergleichsweise steif an den Radführungslenkern zu befestigen, und statt dessen den sich quer zur Fahrzeuglängsrichtung erstreckenden Rückenteil des Stabilisators an zueinander beabstandeten koppelstangenähnlichen Befestigungsgliedern aufzuhängen, die ihrerseits mit Hilfe von Gummielementen kugelbeweglich am Fahrzeugaufbau befestigt sind.

Der Erfindung liegt nun die Aufgabe zugrunde, eine fertigungstechnisch einfache, Koppelstange zur gelenkigen Befestigung eines U-Form-Stabilisatorarms zu schaffen, mit deren Hilfe die Stabilisatorkräfte - bei großer Winkelbeweglichkeit - mit verbessertem Wirkungsgrad auf die Radführungslenker übertragen werden können und die nach Möglichkeit nur wenig Einbauraum benötigt und für eine automatisierte Montage des Stabilisators besonders geeignet erscheint.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Lager zur kugelbeweglichen Befestigung eines Bauteils am Aufbau oder am Radführungslenker eines Kraftfahrzeuges mit einem formfest mit einem Radführungslenker o. ä. verbindbaren Lagerkörper mit einer von einem Zapfen durchdrungenen doppelkegelstumpfförmigen Durchgangsbohrung, deren etwa dem Koppelstangenzapfendurchmesser entsprechender kleinster Durchmesser etwa mittig des Lagerkörpers liegt, sowie mit zwei auf dem Zapfen gelagerten kalottenförmigen Gleitschalen, welche einen Teil des im wesentlichen kugelförmigen Außenmantels des Lagerkörpers umschließen, sind für sich bereits bekannt (z. B. US-PS 2 394 276). Dieses Lager dient zur kugelbeweglichen Befestigung des unteren Endes eines Teleskopstoßdämpfers an einer Kraftfahrzeugachse. Die hierbei vorliegenden kinematischen Verhältnisse sind mit denen bei einer gelenkigen Befestigung eines U-Form-Stabilisatorarms vorliegenden Verhältnissen nicht vergleichbar.

Die erfindungsgemäße Koppelstange gewährleistet eine besonders große Winkelbeweglichkeit mit einem idealen theoretischen Drehpunkt. Dabei wird die kardanische Beanspruchung der Koppelstange selbst vernachlässigbar klein, da sie nach Fortfall der sonst üblichen gummielastischen Elemente keine gummielastischen Kräfte mehr zu übernehmen hat; da die störende Wirkung der Elastizität gummielastischer Elemente fortfällt, wird auch der Stabilisator-Wirkungsgrad bedeutend verbessert. Somit kann nicht nur die Koppelstange selbst kleiner als sonst üblich bemessen oder aber aus einem anderen, preiswerteren Material als sonst üblich hergestellt werden, sondern auch der U-Form-Stabilisator kann kleiner bemessen werden, was eine entsprechende Gewichtsreduzierung und Verbilligung zur Folge hat.

Da es im übrigen auch nicht mehr zu Relativbewegungen zwischen sonst vorhandenen gummielastischen Elementen einerseits und damit zusammenwirkenden Metallteilen andererseits kommt, ergibt sich darüber hinaus eine verbesserte Korrosionsbeständigkeit.

Neben diesen erzielten allgemeinen Funktionsverbesserungen ergeben sich gravierende Verbesserungen bezüglich der wirtschaftlichen Herstellung der Koppelstange selbst sowie bezüglich der Endmontage der Stabilisator/Koppelstangen-Anordnung.

Anhand eines in der Zeichnung dargestellten Ausführungsbeispieles wird die Erfindung nachstehend näher erläutert.

In der Zeichnung zeigen
- Fig. 1: die Anlenkung der Arme eines U-Form-Stabilisators an den unteren Querlenkern einer Kraftfahrzeug-Doppelquerlenkerachse,
- Fig. 2: den Längsschnitt einer Koppelstange eines zweiten Ausführungsbeispieles,
- Fig. 3: den Längsschnitt einer Koppelstange eines dritten Ausführungsbeispieles und
- Fig. 4: den Schnitt entlang der Schnittführung IV-IV in Fig. 3.

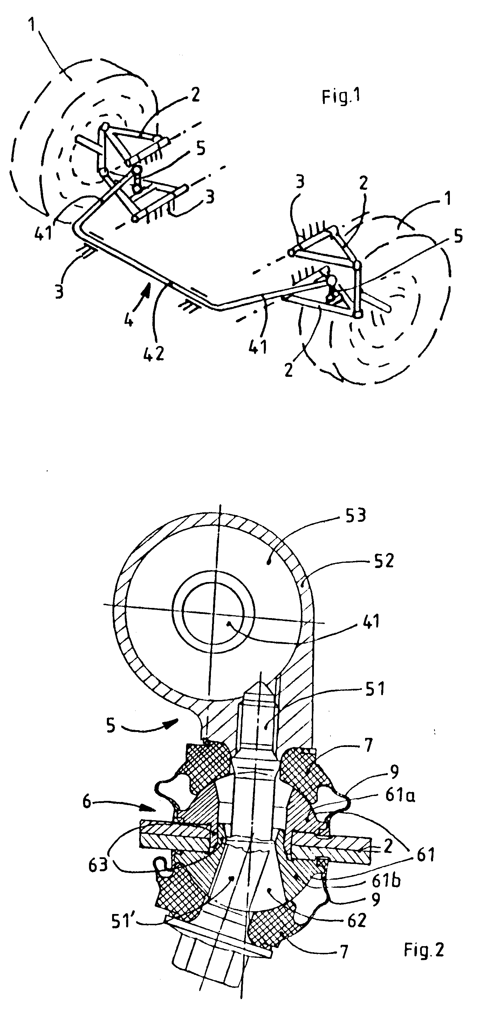

Fig. 1 zeigt in schematisierter Form eine Doppelquerlenkerachse, bei der die beiden Fahrzeugräder 1 jeweils über als Doppelquerlenker ausgebildete Radführungslenker 2 schwenkbar am nur angedeuteten Fahrzeugaufbau 3 angelenkt sind. Die Federung ist hierbei nicht weiter dargestellt. Ein mit seinem Rücken 42 in üblicher Weise schwenkbar am Fahrzeugaufbau angelenkter U-Form-Stabilisator 4 ist mit seinen etwa in Fahrzeuglängsrichtung weisenden Armen 41 jeweils unter Zwischenschaltung einer in besonderer Weise ausgebildeten Koppelstange 5 verzwängungsfrei am unteren der zwei Querlenker 2 angelenkt.

Wie die Figuren 2 bis 4 erkennen lassen, besteht die erfindungsgemäße Koppelstange 5 im wesentlichen aus einem Koppelstangenkopf 52 zur Aufnahme des Stabilisatorarms 41 und einem Koppelstangenzapfen 51, der im Ausführungsbeispiel mit dem Querlenker 2 verbunden ist. Im Koppelstangenkopf 52 ist ein nur schematisch angedeuteter Ringteil 53 angeordnet, in den der Stabilisatorarm 41 aufgenommen ist und der selbst im Koppelstangenkopf 52 kugelig gelagert ist. Der Ringteil 53 kann dabei aus einem den Stabilisatorarm 41 aufnehmenden inneren Hartgummiring und einem auf diesem befestigten äußeren Kunststoffring mit balliger Außenkontur und guten Gleiteigenschaften bestehen; der Stabilisatorarm 41 kann daher innerhalb des Koppelstangenkopfes 52 verzwängungsfrei bewegt werden.

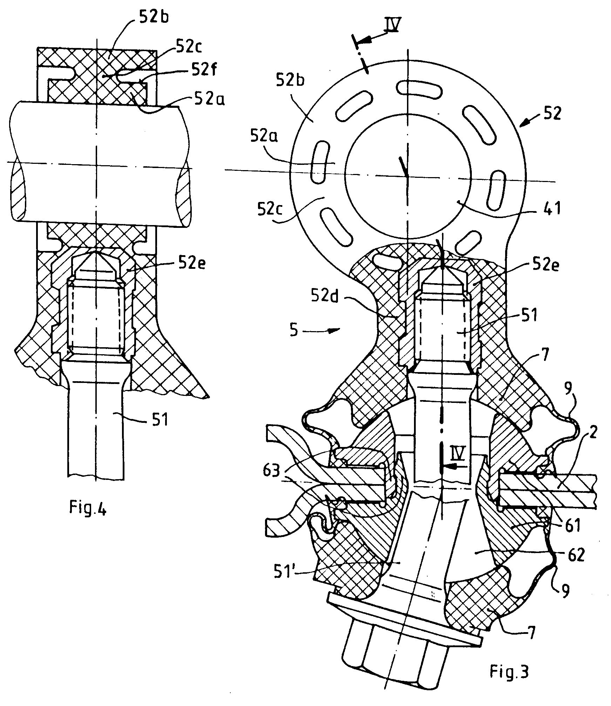

Der Koppelstangenzapfen 51 ist am Radführungslenker 2 über ein Lager 6 befestigt, welches kugelige Bewegungen ermöglicht. Dieses Lager besteht aus einem mit dem Radführungslenker 2 formfest verbindbaren Lagerkörper 61 mit einem im wesentlichen kugelförmigen Außenmantel sowie aus zwei auf dem Koppelstangenzapfen gelagerten Gleitschalen 7, die - auf den Lagerkörper 61 bezogen - einander diametral gegenüberliegen und einen Teil des kugelförmigen Außenmantels des Lagerkörpers 61 umschließen. Im Lagerkörper 61 verläuft eine vom Koppelstangenzapfen 51 durchdrungene Durchgangsbohrung 62 in Form eines etwa symmetrischen Doppelkegelstumpfes, dessen kleinster Durchmesser etwa in Höhe der Lagerkörpermitte liegt und etwas größer bemessen ist als der Durchmesser des Koppelstangenzapfens 51. Der Koppelstangenzapfen 51 kann daher - geführt durch die Gleitschalen 7 - innerhalb des Lagerkörpers 61 um einen lagerkörpermittigen Drehpunkt verschwenkt werden, wobei der Doppelkegelmantel der Durchgangsbohrung 62 den möglichen Schwenkbereich festlegt. Im unteren Teil der Fig. 2 und 3 ist der Koppelstangenzapfen in einer maximal verschwenkten Lage dargestellt und mit 51' beziffert.

Der vorzugsweise aus Kunststoff gefertigte Lagerkörper 61 kann grundsätzlich einteilig ausgebildet sein. Fertigungs- und montagetechnisch günstiger ist es jedoch, ihn - wie in den Ausführungsbeispielen dargestellt - aus zwei Kugelhälften 61a und 61b zusammenzufügen.

Es ist leicht erkennbar, daß die erfindungsgemäße Vorrichtung eine vergleichsweise große Winkelbeweglichkeit gewährleistet, ohne daß es hierbei zu Verzwängungen kommen kann.

Die Koppelstange ist aus zwei separaten Bauteilen, dem Koppelstangenkopf 52 und dem Koppelstangenzapfen 51 zusammengesetzt. Der Koppelstangenzapfen 51 ist in den dargestellten Ausführungsbeispielen als Schraubbolzen ausgebildet, der mit seinem Gewindeteil in den Koppelstangenkopf 52 eingeschraubt ist und dadurch die auf ihm gelagerten beiden Gleitschalen 7 sowie den Lagerkörper 61 miteinander in einer kugelige Bewegungen ermöglichenden und weitgehend spielfreien Gleitverbindung hält. Grundsätzlich kann der Koppelstangenzapfen aber auch in den Koppelstangenkopf eingesteckt und mit diesem durch eine Schnappverbindung o. ä. verbunden sein.

Dadurch, daß der Koppelstangenzapfen 51 als in den Koppelstangenkopf 52 einschraubbarer Schraubbolzen bzw. einsteckbarer Zapfen ausgebildet ist, ergibt sich für die Koppelstange eine vergleichsweise geringe Baulänge, da die für die Montage sonst benötigte Gewindelänge voll in den Koppelstangenkopf verlegt wird.

Durch die Zweiteilung der Koppelstange 5 ergeben sich darüber hinaus vorteilhafte und insbesondere kostenreduzierende Fertigungsmöglichkeiten. Statt eines einteiligen vergleichsweise teuren Schmiedeteils, dessen Schaft und Gewinde in einem besonderen Arbeitsgang bearbeitet werden müssen, kann der Koppelstangenzapfen jetzt als hochfestes, jedoch sehr preiswertes Kaltfließteil ausgebildet werden, bei dem nur noch das Gewinde etc. bearbeitet werden muß. Der Koppelstangenkopf 52 dagegen kann je nach Bedarf als einfaches Schweißteil, als Gußteil (Grauguß oder z. B. Aluminiumguß) oder als Sinterteil oder aber als Kunststoffteil hergestellt werden, wobei insbesondere Guß-, Sinter- und Kunststoffteile zusätzliche Gestaltungsmöglichkeiten eröffnen.

Die Zweiteilung der Koppelstange verbessert darüber hinaus entscheidend, oder aber ermöglicht sogar erst eine automatisierte Montage des Stabilisators.

Üblicherweise wird der U-Form-Stabilisator am Fahrzeugaufbau nämlich vormontiert und die beiden Koppelstangen auf den Stabilisatorarmen befestigt. Bei einteiligen Koppelstangen mit vergleichsweise langen Koppelstangenzapfen, müßten die Koppelstangenzapfen dann bei der Endmontage gezielt in die Lageraufnahme, z. B. in die Durchgangsbohrung des zuvor an den Radlenkern befestigten kugelförmigen Lagerkörpers eingefädelt werden, was praktisch nur manuell geschehen könnte, weil ein automatisiertes Einfädeln einen hohen steuerungstechnischen Aufwand erfordern würde.

Durch die zweigeteilte Koppelstange wird eine automatisierte Montage dagegen vergleichsweise einfach. Hier kann nämlich der auf dem Stabilisatorarm 41 vormontierte vergleichsweise kurze Koppelstangenkopf 52 mit sehr geringem steuertechnischem Aufwand so über den im Radführungslenker 2 vormontierten Lagerkörper 61 positioniert werden, daß sein nicht weiter beziffertes Gewindeloch exakt über der Durchgangsbohrung 62 des Lagerkörpers 61 zu liegen kommt, so daß der den Koppelstangenzapfen 51 bildende Schraubbolzen von einem Schraubautomaten nur noch von unten durch die Durchgangsbohrung 62 gesteckt und in den Koppelstangenkopf 52 eingeschraubt werden muß.

Um eine Verschmutzung des Lagers 6 zu verhindern und die leichtgängige Winkelbeweglichkeit der Vorrichtung langfristig zu erhalten, ist das Lager 6 nach außen durch elastische Staubdichtungen 9 abgedichtet.

Besondere Vorteile ergeben sich, wenn die Staubdichtungen 9 - wie in den Ausführungsbeispielen - nicht als separate Bauteile ausgebildet sind, sondern jeweils einteilig an den beiden einander diametral gegenüberliegenden kalottenförmigen Gleitschalen 7 angeformt sind.

Eine solche einteilige Ausbildung wird ermöglicht, wenn die Gleitschalen 7 aus einem elastischen Kunststoff gefertigt werden, vorzugsweise aus einem elastischen Polyester, derart, wie er beispielsweise von Dupont unter dem Warenzeichen Hytrel vertrieben wird.

Das elastische Polyester Hytrel ist zur Herstellung der Gleitschalen 7 mit einteilig angeformten Dichtmanschetten 9 besonders gut geeignet, weil es die Eigenschaft besitzt, einerseits bei dickwandigeren Bauteilen, wie z. B. den Gleitschalen 7, hohe Steifigkeit und andererseits bei dünnwandigen Bauteilen, wie z. B. den Staubdichtungen 5, hohe Flexibilität zu gewährleisten, d. h. Eigenschaften, die sich sonst oft gegenseitig ausschließen. Bei den Ausführungsbeispielen sind in dieser Weise an den beiden aus einem solchen elastischen Polyester gefertigten kalottenförmigen Gleitschalen 7 jeweils dünnwandige rotationssymmetrische axiale Fortsätze 9 einteilig angeformt, die als balgförmige Dichtmanschette ausgebildet sind und mit ihren einander zugekehrten freien Enden jeweils im Verbindungsbereich zwischen Radführungslenker 2 und Lagerkörper 61 dichtend anliegen.

Durch die einteilig angeformten Dichtmanschetten 9 wird nicht nur die Montage der Anordnung erleichtert, sondern es ergeben sich auch günstigere Abmessungen und eine höhere Maßhaltigkeit der Gleitschalen/Dichtungs-Einheit sowie der Gesamtanordnung, was sich auch bei einer späteren Endmontage der Stabilisatoranordnung vorteilhaft bemerkbar macht.

Im Ausführungsbeispiel gemäß den Figuren 3 und 4 ist eine zweigeteilte Koppelstange dargestellt, bei der auch der Koppelstangenkopf 52 selbst aus einem elastischen Kunststoff, vorzugsweise einem elastischen Polyester nach Art des Hytrel gefertigt ist. In diesem Ausführungsbeispiel sind der Koppelstangenkopf 52, die ihm benachbarte kalottenförmige Gleitschale 7 sowie die entsprechende Staubdichtung 9 zu einem einteiligen Bauteil zusammengefaßt.

Der Koppelstangenkopf 52 weist dabei einen im wesentlichen steifen ringförmigen Innenteil 52a zur Aufnahme des Stabilisatorarms 41 und einen diesen Innenteil ringähnlich umschließenden, ebenfalls im wesentlichen steifen Außenteil 52b mit einem angeformten Aufnahmeteil 52d zur Aufnahme des Koppelstangenzapfens 51 auf. Das Innenteil ist durch entlang seinem Umfang verteilt angeordnete Stege 52c o. ä. derart mit dem Außenteil 52b verbunden, daß es relativ zu diesem - begrenzt - sowohl kardanische Bewegungen als auch Winkelbewegungen in Umfangsrichtung ausführen kann.

Wie die Schnittdarstellung der Fig. 4 erkennen läßt, sind die Stege 52c im dargestellten Ausführungsbeispiel durch entsprechende axiale Ausnehmungen 52f axial wesentlich kleiner bemessen sowohl als das Außenteil 52b als auch das Innenteil 52a.

Im dargestellten Ausführungsbeispiel ist im aus Kunststoff gefertigten Koppelstangenkopf 52 ein metallischer Gewindeeinsatz 52e zur Aufnahme des als Schraubbolzen ausgebildeten Koppelstangenzapfens 51 eingelassen. Es hängt von der Beanspruchung der Koppelstange ab, ob ggf. auch auf einen solchen metallischen Einsatz verzichtet werden kann.

Insbesondere bei aus Kunststoff gefertigten Koppelstangenköpfen ist es zumindest bei geringeren Koppelstangenbeanspruchungen auch möglich, den Koppelstangenzapfen 51 als in den Koppelstangenkopf einsteckbaren und in diesen durch eine Schnappverbindung o. ä. arretierbaren Zapfen auszubilden.

Der kugelförmige Lagerkörper 61 ist in den Ausführungsbeispielen aus zwei Kugelhälften 61a und 61b zusammengefügt. Diese weisen an ihren einander zugekehrten Kreisflächen radial innenliegende ringförmige o. ä. axiale Fortsätze 63 auf, welche konzentrisch zur Längsachse der doppelkegelstumpfförmigen Durchgangsbohrung 62 liegen. Sie sind radial federnd ausgebildet und derart bemessen, daß die beiden Kugelhälften mit ihren axialen Fortsätzen selbstzentrierend ineinandergesteckt und nach Art einer Schnappverbindung miteinander verbunden werden.

Die durch die ringförmige Schnappverbindung bewirkte Selbstzentrierung der vorzugsweise als Kunststoff-Spritzteile ausgebildeten beiden Kugelhälften 61a und 61b gewährleistet unabhängig von den jeweiligen Einbauverhältnissen einen sehr exakten Drehpol für die Schwenkbewegungen des Koppelstangenzapfens 51, was natürlich für die Gelenkfunktion von Vorteil ist und darüber hinaus eine Verschleißminimierung im Bereich Lagerkörper/Gleitschalen bewirkt.

Die erfindungsgemäße Koppelstange ermöglicht vergleichsweise große Winkelbewegungen mit einem äußerst exakten Drehpol für die Schwenkbewegungen des Koppelstangenzapfens, was zur Minimierung des Lagerkörper/Gleitschalen-Verschleißes sowie zu einer weiteren Entlastung der durch Fortfall sonst üblicher gummielastischer Elemente bereits entlasteten Koppelstange beiträgt. Durch die spezielle Ausbildung des zweiteiligen Lagerkörpers sowie der Gleitschalen mit angeformten Dichtmanschetten wird die Maßgenauigkeit verbessert und damit die weitgehende Unabhängigkeit des exakten Drehpols von den jeweiligen Einbauverhältnissen vergrößert. Durch die Zweiteilung der Koppelstange selbst ergibt sich eine besonders kompakte, d. h. vergleichsweise wenig Bauraum erfordernde und dabei sehr wirtschaftlich herzustellende Baueinheit, die darüber hinaus den wesentlichen Vorteil besitzt, für eine automatisierte Montage besonders geeignet zu sein.

Die erfindungsgemäße Koppelstange ist nicht auf die Anwendung bei einer in Fig. 1 dargestellten Doppelquerlenker-Achse beschränkt. Sie kann in vorteilhafter Weise auch bei anderen Achsausführungen eingesetzt werden, z. B. bei einer Federbein/Querlenkerachse, wie sie bei modernen frontgetriebenen Fahrzeugen als Vorderachse häufig üblich ist.

Abweichend vom Ausführungsbeispiel ist es generell auch möglich, die erfindungsgemäße Koppelstange bei solchen Stabilisatoranordnungen einzusetzen, bei denen die Stabilisatorarme nicht an den Radführungslenkern, sondern am Fahrzeugaufbau angelenkt sind und der Rücken des Stabilisators seinerseits mit den Radführungslenkern bzw. dem Achskörper in Verbindung steht.

## Patentansprüche

1. Koppelstange zur gelenkigen Befestigung eines U-Form-Stabilisatorarms am Fahrzeugaufbau oder an einem Radführungslenker eines Kraftfahrzeuges, gekennzeichnet durch folgende Merkmale:
a) Die Gelenk-Koppelstange (5) enthält einen Koppelstangenkopf (52) zur Aufnahme des Stabilisatorarms (41) sowie einen Koppelstangenzapfen (51) mit einem damit verbundenen Lager (6) zur kugelbeweglichen Befestigung am Fahrzeugaufbau bzw. Radführungslenker (2).
b) Der Koppelstangenkopf (52) und der Koppelstangenzapfen (51) sind separate Bauteile und der Koppelstangenzapfen (51) ist als mit seinem Gewindeteil in den Koppelstangenkopf (52) einschraubbarer Schraubbolzen oder als in den Koppelstangenkopf (52) einsteckbarer und in diesem durch eine Schnappverbindung o. ä. arretierbarer Zapfen ausgebildet.
c) Das Lager (6) enthält einen mit dem Fahrzeugaufbau bzw. dem Radführungslenker formfest verbindbaren Lagerkörper (61) mit einer vom Koppelstangenzapfen (51) durchdrungenen doppelkegelstumpfförmigen Durchgangsbohrung (62), deren etwa dem Koppelstangenzapfendurchmesser entsprechender kleinster Durchmesser etwa mittig des Lagerkörpers (61) liegt, sowie zwei auf dem Koppelstangenzapfen (51) gelagerte kalottenförmige Gleitschalen (7), welche einen Teil des im wesentlichen kugelförmigen Außenmantels des Lagerkörpers (61) - einander diametral gegenüberliegend - umschließen.
d) Die auf dem Koppelstangenzapfen (51) angeordneten Gleitschalen (7) sowie der vom Koppelstangenzapfen (51) durchdrungene Lagerkörper (61) sind miteinander durch eine Schraubvorrichtung (8) in einer kugelige Bewegungen ermöglichenden Gleitverbindung gehalten.

2. Koppelstange nach Anspruch 1,
dadurch gekennzeichnet, daß der Koppelstangenkopf (52) als metallisches Guß-, Schweiß- oder Sinterteil oder als Kunststoffteil und der Koppelstangenzapfen (51) als hochfestes Kaltfließteil ausgebildet ist.

3. Koppelstange nach Anspruch 2,
dadurch gekennzeichnet, daß der Koppelstangenkopf (52) aus einem elastischen Kunststoff, vorzugsweise aus einem elastischen Polyester gefertigt ist.

4. Koppelstange nach Anspruch 3,
dadurch gekennzeichnet, daß im Koppelstangenkopf (52) ein metallischer Gewindeeinsatz (52e) zur Aufnahme des Koppelstangenzapfens (51) eingelassen ist.

5. Koppelstange nach Anspruch 3 oder 4,
dadurch gekennzeichnet, daß der Koppelstangenkopf (52) einen im wesentlichen steifen ringförmigen Innenteil (52a) zur Aufnahme des Stabilisatorarms (51) und einen den Innenteil (52a) ringähnlich umschließenden,
im wesentlichen steifen Außenteil (52b) mit einem Aufnahmeteil (52d) zur Aufnahme des Koppelstangenzapfens (51) aufweist
und daß das Innenteil (52a) durch entlang seinem Umfang verteilt angeordnete Stege (52c) o. ä. derart mit dem Außenteil (52b) verbunden ist, daß es relativ zu diesem - jeweils begrenzt - kardanische Bewegungen sowie in Umfangsrichtung Winkelbewegungen ausführen kann.

6. Koppelstange nach Anspruch 5,
dadurch gekennzeichnet, daß am Aufnahmeteil (52d) des Koppelstangenkopfes (52) eine kalottenförmige Gleitschale (7) einteilig angeformt ist.

7. Koppelstange nach Anspruch 6,
dadurch gekennzeichnet, daß an der kalottenförmigen Gleitschale (7) ein dünnwandiger rotationssymmetrischer axialer Fortsatz (9) einteilig angeformt ist, der als balgförmige Dichtmanschette zum Schutz des Lagerkörpers (61) gegen äußere Verschmutzung ausgebildet ist.

8. Koppelstange nach Anspruch 1,
dadurch gekennzeichnet, daß die kalottenförmigen Gleitschalen (7) aus einem elastischen Kunststoff, vorzugsweise elastischem Polyester gefertigt sind, an denen dünnwandige rotationssymmetrische axiale Fortsätze (9) einteilig angeformt sind, die als balgförmige Dichtmanschetten zum Schutz des Lagerkörpers (61) gegen äußere Verschmutzungen ausgebildet sind.

9. Koppelstange nach Anspruch 1,
dadurch gekennzeichnet, daß der Lagerkörper (61) aus zwei Kugelhälften (61a, 61b) besteht, die durch eine zur Längsachse der Durchgangsbohrung (62) konzentrische ringförmige Schnappverbindung selbstzentrierend zusammengefügt sind.

10. Koppelstange nach Anspruch 9,
dadurch gekennzeichnet, daß die beiden Kugelhälften (61a, 61b) des Lagerkörpers (61) als Kunststoff-Spritzteile ausgebildet sind und an ihren einander zugekehrten Kreisflächen - konzentrisch zur Längsachse der Durchgangsbohrung (62) - radial innenliegende ringförmige o. ä. axiale Fortsätze (63) aufweisen, welche radial federnd axial ineinandersteckbar sind.

## Claims

1. A connecting rod for attaching a U-shaped stabiliser arm in an articulated manner to a motor vehicle body or to a wheel guide connecting rod of a motor vehicle, characterised by the following features:
a) the articulated connecting rod (5) comprises a connecting rod head (52) for receiving the stabiliser arm (41) as well as a connecting rod journal (51) having a bearing (6) connected thereto for the purpose of forming an attachment to the motor vehicle body or wheel guide connecting rod (2), which attachment can perform a spherical movement.
b) the connecting rod head (52) and the connecting rod journal (51) are separate components and the connecting rod journal (51) is formed as a screw bolt which can be screwed with its threaded part into the connecting rod head (52) or as a pin which can be inserted into the connecting rod head (52) and can be locked therein by virtue of a snap connection or similar.
c) the bearing (6) comprises a bearing body (61) which can be connected in a form-fixed manner to the motor vehicle body or to the wheel guide connecting rod, which bearing body has a through-going bore (62) in the shape of a double truncated cone and which bore is penetrated by the connecting rod journal (51) and the smallest diameter of the through-going bore (62), which corresponds approximately to the diameter of the connecting rod journal, lies approximately in the centre of the bearing body (61), as well as comprising two dome-shaped sliding shells (7) mounted on the connecting rod journal (51), which sliding shells encompass, lying diametrically opposite each other, a part of the substantially spherical outer periphery of the bearing body (61).
d) the sliding shells disposed on the connecting rod journal (51) as well as the bearing body (61) penetrated by the connecting rod journal (61) are held together by virtue of a screw device (8) in a sliding connection which facilitates a spherical movement.

2. A connecting rod according to claim 1, characterised in that the connecting rod head (52) is formed as a metal part which has been cast, welded or scintered or as a synthetic material part and the connecting rod journal (51) is formed as a high tensile strength cold extrusion part.

3. A connecting rod according to claim 2,
characterised in that the connecting rod head (52) is manufactured in an elastic synthetic material, preferably an elastic polyester.

4. A connecting rod according to claim 3, characterised in that a metal threaded insert (52e) is embedded in the connecting rod head (52) for the purpose of receiving the connecting rod journal (51).

5. A connecting rod according to claim 3 or 4, characterised in that the connecting rod head (52) comprises a substantially rigid annular inner part (52a) for the purpose of receiving the stabiliser arm (51) and a substantially rigid outer part (52b), which encompasses the inner part (52a) like a ring, which outer part (52b) has a receiving part (52d) for the purpose of receiving the connecting rod journal (51) and that the inner part (52a) is connected to the outer part (52b) by virtue of cross pieces (52c) or similar which are disposed distributed over the periphery of the inner part (52a) in such a way that the inner part (52a) can perform cardamic movements, limited in each case, relative to the outer part (52b) as well as annular movements in the peripheral direction.

6. A connecting rod according to claim 5, characterised in that a dome-shaped sliding shell (7) is formed in one piece as one at the receiving part (52d) of the connecting rod head (52).

7. A connecting rod according to claim 6, characterised in that a thin-walled rotationally symmetrical axial projection (9) is formed as one piece as one at the dome-shaped sliding shell (7) which axial projection (9) is formed as a bellow-shaped sealing collar for protecting the bearing body (61) against contamination from outside.

8. A connecting rod according to claim 1, characterised in that the dome-shaped sliding shells (7) are manufactured in an elastic synthetic material, preferably elastic polyester, and formed as one piece as one at the sliding shells (7) are thin-walled rotationally symmetrical axial projections (9), which are formed as bellows-shaped sealing collars for protecting the bearing body (61) against contamination from the outside.

9. A connecting rod according to claim 1, characterised in that the bearing body (61) comprises two spherical halves (61a, 61b) which are joined together in a self-centring manner by virtue of an annular snap connection concentric to the longitudinal axle of the through-going bore (62).

10. A connecting rod according to claim 9, characterised in that the two spherical halves (61a, 61b) of the bearing body (61) are formed as synthetic material injection moulded parts and comprise at their circular surfaces facing each other, concentric to the longitudinal axis of the through-going bore (62), radial inwards lying annular or similar axial projections (63), which can be pushed axially into each other in a radial resilient manner.

## Revendications

1. Tige de couplage pour la fixation articulée d'un bras de barre stabilisatrice en forme de U sur la caisse d'un véhicule ou sur une bielle de poussée de roue d'un véhicule automobile, caractérisée par les caractéristiques suivantes:
a) La tige de couplage articulée (5) comporte une tête (52) de tige de couplage destinée à recevoir un bras de barre stabilisatrice (41), ainsi qu'un tourillon (51) de tige de couplage comportant un palier (6) relié à ce dernier, destiné à permettre sa fixation articulée à rotule sur la caisse du véhicule ou sur la bielle de poussée de roue (2).
b) La tête (52) de la tige de couplage et le tourillon (51) de la tige de couplage sont des composants séparés, et le tourillon (51) de la tige de couplage est réalisé sous forme d'un boulon fileté pouvant être vissé, par sa partie filetée, dans la tête (52) de la tige de couplage, ou sous forme d'un tourillon pouvant être emboîté dans la tête (52) de la tige de couplage et pouvant y être arrêté grâce à un dispositif à enclenchement ou similaire.
c) Le palier (6) comporte un corps de palier (61) pouvant être relié rigidement par complémentarité de forme à la caisse du véhicule ou à la bielle de poussée de roue, ce corps comportant un alésage débouchant bi-tronconique (62) traversé par le tourillon (51) de la tige de couplage, le diamètre le plus petit de l'alésage, correspondant à peu près au diamètre du tourillon de la tige de couplage, étant situé à peu près au milieu du corps de palier (61), ainsi que deux coquilles à glissement (7), en forme de calottes, portées par le tourillon (51) de la tige de couplage et entourant une partie de l'enveloppe extérieure essentiellement sphérique du corps de palier (61) - en étant diamétralement opposées l'une à l'autre.
d) Les coquilles à glissement (7) disposées sur le tourillon (51) de la tige de couplage, ainsi que le corps de palier (61) traversé par le tourillon (51) de la tige de couplage sont maintenus en liaison de glissement permettant des mouvements de rotule, au moyen d'un dispositif à vis (8).

2. Tige de couplage selon la revendication 1, caractérisée en ce que la tête (52) de la tige de couplage est réalisée sous forme d'une pièce métallique moulée, soudée ou frittée, ou sous forme d'une pièce en matière plastique, et en ce que le tourillon (51) de la tige de couplage est réalisé sous forme d'une pièce de fluage à froid à haute résistance.

3. Tige de couplage selon la revendication 2, caractérisée en ce que la tête (52) de la tige de couplage est fabriquée en une matière plastique élastique, de préférence en polyester élastique.

4. Tige de couplage selon la revendication 3, caractérisée en ce qu'un insert fileté métallique (52e), destiné à recevoir le tourillon (51) de la tige de couplage, est inséré dans la tête (52) de la tige de couplage.

5. Tige de couplage selon la revendication 3 ou 4, caractérisée en ce que la tête (52) de la tige de couplage comporte une partie annulaire intérieure (52a) sensiblement rigide, destinée à recevoir le bras de la barre stabilisatrice (41), et une partie extérieure (52b) sensiblement rigide, entourant de façon annulaire la partie intérieure (52a), comprenant une partie réceptrice (52d) destinée à recevoir le tourillon (51) de la tige de couplage, et en ce que la partie intérieure (52a) est reliée à la partie extérieure (52b), par l'intermédiaire de nervures (52c) ou similaires réparties sur le pourtour de cette partie, de façon à pouvoir effectuer - dans certaines limites - des mouvements de cardan par rapport à l'autre partie, et des mouvements angulaires dans le sens de la circonférence.

6. Tige de couplage selon la revendication 5, caractérisée en ce qu'une coquille à glissement (7) en forme de calotte est formée d'un seul tenant avec la partie réceptrice (52d) de la tête (52) de la tige de couplage.

7. Tige de couplage selon la revendication 6, caractérisée en ce qu'un prolongement axial (9) à paroi mince, à symétrie de révolution, est formé d'un seul tenant avec la coquille à glissement (7) en forme de calotte, ce prolongement étant réalisé sous forme d'une manchette d'étanchéité en forme de soufflet destinée à protéger le corps de palier (61) contre la contamination par les impuretés extérieures.

8. Tige de couplage selon la revendication 1, caractérisée en ce que les coquilles à glissement (7) en forme de calottes sont fabriquées en une matière plastique élastique, de préférence en polyester élastique, des prolongements axiaux (9) à parois minces, à symétrie de révolution , sont formés d'un seul tenant avec les coquilles à glissement, ces prolongements étant configurés comme des manchettes d'étanchéité en forme de soufflets destinées à protéger le corps de palier (61) contre la contamination par les impuretés extérieures.

9. Tige de couplage selon la revendication 1, caractérisée en ce que le corps de palier (61) est composé de deux hémisphères (61a, 61b) assemblés avec centrage automatique, par l'intermédiaire d'une liaison annulaire à enclenchement, concentrique par rapport à l'axe longitudinal de l'alésage débouchant (62).

10. Tige de couplage selon la revendication 9, caractérisée en ce que les deux hémisphères (61a, 61b) du corps de palier (61) sont réalisés sous forme de pièces moulées par injection, en matière plastique, et présentent, au niveau de leurs faces circulaires opposées - de façon concentrique par rapport à l'axe longitudinal de l'alésage débouchant (62) - des prolongements axiaux annulaires ou similaires (63), situés radialement à l'intérieur, qui peuvent être emboîtés axialement les uns dans les autres, en faisant ressort dans le sens radial.
